# FASCICULE DE BREVET EUROPEEN

(11) **EP 3 710 312 B1**
(45) Date de publication et mention de la délivrance du brevet: **07.09.2022**
(21) Numéro de dépôt: 18803627.1
(22) Date de dépôt: 13.11.2018
(51) Int. Cl.: B60R 7/04, B60R 11/00

(54) **ENSEMBLE DE RANGEMENT MOBILE D'HABITACLE**
MOBILE STAUANORDNUNG FÜR EINE KABINE
MOBILE STOWAGE ASSEMBLY FOR A CABIN

(30) Priorité: 13.11.2017 FR 1760621
(43) Date de publication de la demande: 23.09.2020
(73) Titulaire: Renault s.a.s, 92100 Boulogne Billancourt (FR)
(72) Inventeur: MARCEAU, Thierry, 92500 Rueil-Malmaison (FR); DAGOREAU, Alain, 91410 Dourdan (FR); CHAPUIS, Claude, 91140 Villebon sur Yvette (FR); BEAUJARD, Sebastien, 28100 Dreux (FR)
(74) Mandataire: Renault Group
(86) Numéro de dépôt international: PCT/EP2018/081005
(87) Numéro de publication internationale: WO 2019/092263

(56) Documents cités:
- EP-A1- 1 479 565
- EP-A1- 2 093 107
- CA-A1- 2 245 311
- DE-A1-102008 010 393
- FR-A1- 2 864 492
- FR-A1- 2 879 980

## Description

La présente invention se rapporte à un ensemble de rangement mobile d'habitacle de véhicule automobile.

Un domaine d'application envisagé est celui des consoles mobiles en translation au milieu de l'habitacle, entre l'avant et l'arrière de celui-ci et en passant entre le siège conducteur et le siège passager.

Des ensembles de rangement de ce type sont bien connus. Ils comportent deux rails de guidage profilés en U installés en regard et parallèlement l'un à l'autre selon la direction longitudinale du véhicule et au centre de l'habitacle. Les rails de guidage présentent chacun une aile inférieure définissant ainsi deux chemins de roulement longitudinaux de longue portée. L'ensemble de rangement comporte en outre une console montée sur un châssis. Le châssis est équipé, sur chacun de ses côtés latéraux, d'une paire de galets. La console est alors reliée aux deux rails de guidage au moyen des paires de galets qui viennent s'engager respectivement dans les deux rails de guidage profilés en U, et qui prennent appui sur les deux chemins de roulement longitudinaux. Aussi, la console est-elle prisonnière des rails de guidage, car les paires de galets sont elles-mêmes prisonnières, respectivement, des rails de guidage profilés en U. Les galets sont montés libres en rotation sur le châssis et partant, ils peuvent rouler sur les chemins de roulement dans deux sens opposés. De la sorte, la console est non seulement prisonnière des rails de guidage, mais elle est également mobile en translation selon une direction longitudinale entre l'avant et l'arrière de l'habitacle du véhicule sur une longue portée.

On pourra se référer au document canadien CA 2 245 311 lequel décrit un tel ensemble de rangement mobile. Un autre ensemble de rangement mobile correspondant au préambule de la revendication 1 est décrit dans le document EP 1479 565 A1.

Bien que la console soit prisonnière des deux rails de guidage, un jeu fonctionnel est nécessaire pour que les galets puissent rouler librement sur les chemins de roulement, et en conséquence, la console tend à être entraînée en battement selon une direction transversale du véhicule dans certaines phases de conduite de ce dernier.

Aussi, un problème qui se pose et que vise à résoudre la présente invention est de fournir un ensemble de rangement mobile dont la console puisse être entraînée librement en translation selon la direction longitudinale du véhicule, en étant guidée, mais qui soit parfaitement immobile selon une direction perpendiculaire.

Dans ce but, il est proposé un ensemble de rangement mobile d'habitacle de véhicule automobile comprenant : deux rails de guidage adaptés à être installés parallèlement selon une direction longitudinale et au centre d'un habitacle de véhicule automobile, lesdits deux rails présentant chacun un chemin de roulement ; une console centrale comportant un châssis présentant deux parties latérales opposées l'une de l'autre, et deux paires de galets respectivement montées sur lesdites deux parties latérales, lesdites deux paires de galets étant adaptées à venir respectivement prendre appui sur les chemins de roulement desdits deux rails de guidage pour pouvoir guider ladite console centrale en translation ; lesdits rails de guidage comprennent chacun, en outre, une glissière s'étendant sous ledit chemin de roulement, tandis que ledit châssis comprend deux ailes libres s'étendant respectivement en retour sous lesdites paires de galets pour pouvoir venir à coulissement dans les glissières ; et lesdites deux ailes libres comportent en outre chacune des patins de rattrapage de jeux.

Ainsi, une caractéristique de l'invention réside dans la mise en œuvre de deux glissières respectivement en dessous des chemins de roulement des rails de guidage, et de deux ailes libres correspondantes équipées de patins de rattrapage jeux, sur le châssis et destinées à être engagées dans les glissières. De la sorte, d'une part les galets sont maintenus en pression sur les chemins de roulement grâce aux ailes libres engagées dans les glissières mais au surplus, grâce aux patins de rattrapage de jeu, les galets sont maintenus en pression sur toute la longueur des chemins de roulement. Partant, quelle que soit sa position suivant la direction longitudinale, la console demeure en position fixe selon une composante perpendiculaire dans toutes les phases de roulement du véhicule. En particulier, lorsque le véhicule est en sous régime et que des vibrations se transmettent à l'habitacle, la console n'est pas entraînée en battement.

Préférentiellement, lesdits patins de rattrapage de jeux sont montés au droit de chacun des galets desdites deux paires de galets. De la sorte, les patins de rattrapage de jeux jouent pleinement leur rôle, car ils sont pris en sandwich entre l'aile libre correspondante et le galet, pour être plaqués contre l'intérieur de la glissière comme on l'expliquera ci-après.

Aussi, et selon un mode de mise en œuvre de l'invention particulièrement avantageux, lesdits patins de rattrapage de jeux sont profilés en U pour pouvoir être rapportés à cheval sur lesdites ailes libres. De la sorte il n'est nul besoin de prévoir de moyens d'ancrage important puisque le patin de rattrapage de jeux recouvre entièrement l'aile libre, à tout le moins sur une portion de longueur. En outre, il n'y a aucun contact de l'aile libre avec la glissière, et par conséquent, les coefficients de frottement de l'aile libre à l'intérieur de la glissière dépendent de la nature du matériau des patins de rattrapage de jeux.

Selon une caractéristique de mise en œuvre de l'invention avantageuse, chacun desdits patins de rattrapage de jeux présente un fond et deux ailes opposées, et ledit fond et l'une desdites ailes présentent une pluralité de portions en saillie compressibles élastiquement. Les portions en saillie compressibles s'étendent vers l'extérieur du profilé en U. Préférentiellement, ladite une desdites ailes présentant des portions en saillie compressibles élastiquement, est celle qui vient s'étendre en regard des galets, de manière à pouvoir venir prendre appui, à l'intérieur de la glissière, à l'opposé des chemins de roulement du rail. De la sorte, les galets et les patins de rattrapage de jeux, grâce aux portions en saillie compressibles élastiquement, viennent prendre en pincement le rail entre le chemin de roulement et la paroi opposée située à l'intérieur de la glissière. Par ailleurs, les portions en saillie compressibles élastiquement dudit fond viennent en appui élastique dans le fond de la glissière comme on l'expliquera ci-après. On observera que ces portions en saillie compressibles élastiquement permettent également de compenser les tolérances d'usinage des rails de guidage sur toute leur longueur.

Préférentiellement, chacune des portions en saillie présente une partie cylindrique. Cette partie cylindrique des portions en saillie présente des génératrices sensiblement parallèles à l'axe de rotation des galets, pour celles de ladite une desdites ailes, et des génératrices sensiblement perpendiculaires pour ledit fond. Ainsi, on réalise des lignes d'appui transversales à l'intérieur des glissières, ce qui diminue les forces de frottement et favorise le glissement.

Selon une autre caractéristique de mise en œuvre de l'invention particulièrement avantageuse, l'autre desdites ailes opposée à ladite une desdites ailes, présente des lumières de fixation. Ainsi, on prévoit la mise en œuvre d'ergots sur l'aile libre du châssis, à l'opposé des galets ; les ergots venant alors en prise dans les lumières de fixation pour maintenir en position fixe les patins de rattrapage de jeux.

Avantageusement, lesdits patins de rattrapage de jeux sont moulés d'une seule pièce en matière plastique. Grâce au matériau plastique, on obtient des patins intrinsèquement élastiquement compressibles dans une certaine mesure, et de surcroît ils sont réalisés à un coût avantageux. Préférentiellement, lesdits patins de rattrapage de jeux sont moulés en polyamide ou en polyoxyméthylène. Ces deux matériaux sont peu coûteux, et par ailleurs ils présentent des coefficients de frottement particulièrement bas pour permettre un bon coulissement des ailes libres dans les glissières.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective de dessus d'un habitacle de véhicule automobile incluant l'objet de l'invention ;
- la Figure 2 est une vue schématique en coupe droite de l'objet de l'invention représenté sur la Figure 1 ;
- la Figure 3 est une vue schématique de détail de la Figure 2 ;
- la Figure 4A est une vue schématique de détail en perspective, selon un premier angle de vue, d'un élément de la Figure 2 ;
- la Figure 4B est une vue schématique de détail agrandie de l'objet représenté sur la Figure 4A ; et,
- la Figure 5 est une vue schématique de détail en perspective, selon un second angle de vue, de l'élément de la Figure 2.

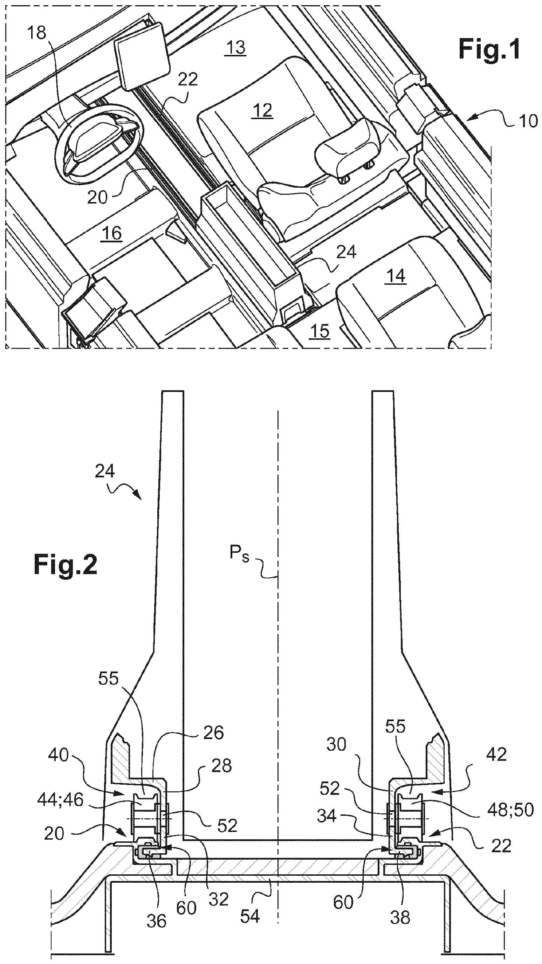

La Figure 1 illustre en vue de dessus l'habitacle de véhicule automobile 10 présentant un siège passager avant 12, situé dans un espace avant 13 de l'habitacle 10, et un siège passager arrière 14, situé dans un espace arrière 15 de l'habitacle 10. L'habitacle de véhicule automobile 10 comprend également un espace conducteur 16 situé en regard d'un volant de conduite 18 ; l'espace conducteur 16 et le siège passager avant 12 sont séparés l'un de l'autre, selon la direction longitudinale du véhicule automobile 10, par deux rails de guidage parallèles 20, 22. Les deux rails de guidage parallèles 20, 22 s'étendent de l'espace avant 13 de l'habitacle 10, vers l'espace arrière 15.

Sur ces deux rails parallèles 20, 22 une console coulissante 24 est installée. On décrira en référence à la Figure 2, une section droite de la console coulissante 24 au niveau de ses organes d'appui.

On retrouve ainsi, sur la Figure 2, la console coulissante 24 et les rails 20, 22 dont elle est solidaire. La console coulissante 24 comporte un châssis 26 présentant deux longerons en U 28, 30 ouverts à l'opposé l'un de l'autre. Les logerons en U comprennent une paroi de fond latérale 32, 34 qui se prolongent par une aile libre en retour 36, 38. Ainsi, les deux parois de fond latérales 32, 34 s'étendent sensiblement parallèlement l'une à l'autre, tandis que les deux ailes libres en retour 36, 38 s'étendent à l'opposé l'une de l'autre selon un plan commun.

De la sorte, les longerons en U 28, 30 définissent deux logements latéraux 40, 42 du châssis 26, adaptés à recevoir respectivement deux paires de galets 44, 46 ; 48, 50. Les galets 44, 46 ; 48, 50 des paires de galets sont respectivement montés à rotation autour d'axes 52 qui s'étendent en saillie des parois de fond latérales 32, 34 des longerons en U 28, 30. On observera également que les galets 44, 46 ; 48, 50 présentent respectivement une gorge 55.

Les deux rails de guidage 20, 22 sont profilés en S et sont solidaires d'une même embase 54. On observera qu'ils sont symétriques l'un de l'autre par rapport à un plan sagittal Ps.

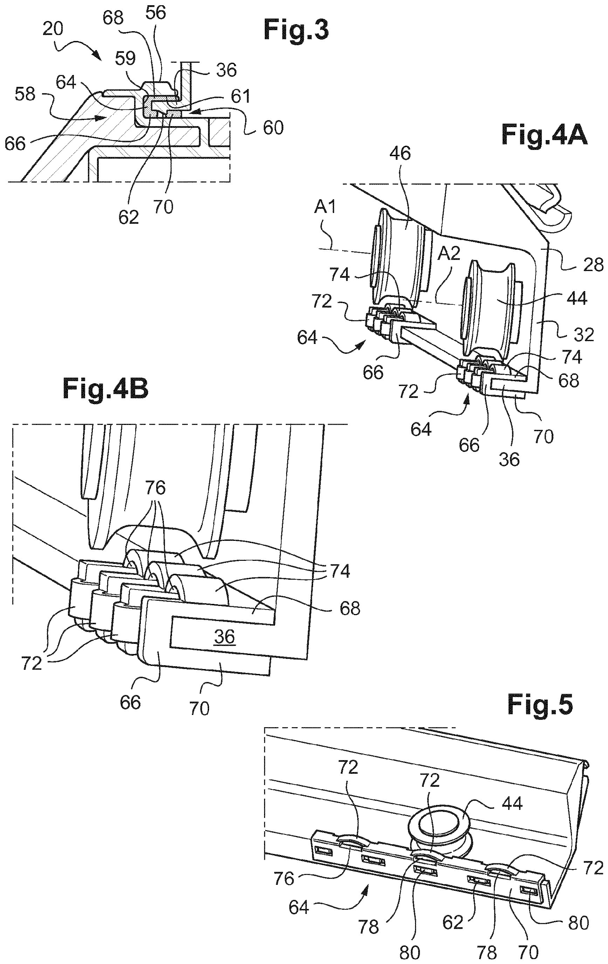

On se référera à la Figure 3 afin de décrire plus en détail l'un, 20, des deux rails de guidage 20,22.

Le rail de guidage 20, profilé en S présente, une partie supérieure en U couchée 58, ouverte vers l'autre rail de guidage 22, et définissant ainsi une glissière 60. La glissière 60 présente une paroi de fond 59 de glissière et une paroi adjacente supérieur 61. La partie supérieure en U 58 présente une partie libre supérieure, et extérieure, opposée à la paroi adjacente supérieure 61. La partie libre supérieure étant pourvue d'un chemin de roulement bombé 56 à l'opposé de la paroi adjacente supérieure 61.

On retrouve sur cette Figure 3, l'une 36 des deux ailes libres en retour 36, 38 laquelle s'étend à l'intérieur de la glissière 60. De surcroît, l'aile libre en retour 36 présente un ergot d'arrêt 62 et elle est engagée à l'intérieur d'un patin de rattrapage de jeux 64, qui lui s'étend entièrement à l'intérieur de la glissière 60. Le patin de rattrapage de jeux 64 présente un fond 66 en appui contre la paroi de fond 59 de glissière, et deux ailes opposées 68, 70, l'aile supérieure opposée 68 étant en appui contre la paroi adjacente supérieure 61.

Le patin de rattrapage de jeux 64 est solidaire de l'aile libre en retour 36, selon la direction longitudinale, grâce à l'ergot d'arrêt 62, comme on l'expliquera ci-après. Aussi, le patin de rattrapage de jeux 64 est monté coulissant à l'intérieur de la glissière 60.

On observera que le patin de rattrapage jeux 64 est réalisé en section, ou barrette, d'une seule pièce, par moulage d'un polymère thermoplastique et en l'espèce d'un polyamide.

On se référera maintenant aux Figures 4 et 5, afin de décrire notamment plus en détail les patins de rattrapage de jeux 64. Les Figures 4 et 5 représentent en perspective sous deux angles différents l'un, 28, des deux longerons en U 28, 30. On retrouve sur la Figure 4A, le longeron 28 présentant sa paroi de fond latérale 32 prolongée par son aile libre en retour 36 et sa paire de galets 44, 46 ; les galets 44,46 étant montés à rotation autour d'axes parallèles A1, A2, sur la paroi de fond latérale 32, à distance l'un de l'autre.

On y retrouve également deux sections de patins de rattrapage de jeux 64 profilés en U et montés à cheval sur l'aile libre en retour 36, respectivement en regard des deux galets 44, 46 constituant l'une des paires de galets.

On retrouve le fond 66 et les deux ailes opposées 68, 70, des patins de rattrapage de jeux 64. Et on observera que le fond 66 comporte une première pluralité de portions en saillie 72 compressibles élastiquement, et que l'aile supérieure opposée 68 présente une seconde pluralité de portions en saillie 74 compressibles élastiquement.

Les portions en saillie 72 de la première pluralité, ici au nombre de trois, sont de géométrie sensiblement cylindrique à génératrices sensiblement perpendiculaire à l'aile libre en retour 36, tandis que les portions en saillie 74 de la seconde pluralité, également au nombre de trois, sont de géométrie sensiblement cylindrique à génératrices sensiblement parallèles aux axes de rotation A1 et A2 des galets 44, 46.

En outre, comme illustré sur la Figure 4B, montrant plus en détail le patin de rattrapage 64, les portions en saillie 74 de géométrie sensiblement cylindrique de l'aile supérieure opposée 68, enjambe un premier évidement 76. Ainsi, de par la nature du polymère utilisé pour mouler les patins de rattrapage de jeux 64, les portions en saillie 74 sont aisément compressibles élastiquement selon une direction perpendiculaire à l'aile libre en retour 36.

De la même façon, les portions en saillie 72 de la première pluralité de portions en saillie, que l'on retrouve également illustrées en détail sur la Figure 5, enjambe un second évidement 78 leur conférant une compressibilité élastique accrue dans une direction sensiblement parallèle aux axes de rotation A1 et A2 des galets 44, 46.

On observera au surplus sur la Figure 5, que le patin de rattrapage de jeux 64 présente des lumières de fixation 80 ménagées de proche en proche dans l'aile opposée inférieure 70, et dans lesquelles viennent s'engager les ergots 62 de l'aile libre en retour 36.

Les éléments décrits ci-dessus en référence aux Figures 3 à 5, se retrouvent de manière symétrique par rapport au plan sagittal Ps sur l'autre longeron 30 et sur l'autre rail de guidage 22, représentés sur la Figure 2.

Ainsi, lorsque les ailes libres en retour 36, 38 sont insérées à l'intérieur des deux glissières opposées 60 tandis que les galets 44, 46 ; 48, 50 viennent respectivement en appui sur le chemin de roulement bombé 56, de la partie libre supérieure des rails 20, 22, les portions en saillie 72, 74 se compriment sensiblement sous l'effet du contact avec la paroi de fond 59 de glissière et la paroi adjacente supérieure 61 respectivement.

De la sorte, et selon une composante verticale, les galets 44, 46 ; 48, 50 sont maintenus en appui sur le chemin de roulement bombé 56 par l'intermédiaire du retour élastique partiel des portions en saillie 74 de la seconde pluralité de portions en saillie.

De surcroît, et selon une composante transversale, le châssis 26 de la console coulissante 24 est maintenu en position fixe grâce au retour élastique partiel des portions en saillie 72 de la première pluralité de portions en saillie.

Partant, lorsque la console 24 est entraînée en translation selon une composante longitudinale, les écarts de cotes ou de parallélisme des deux rails de guidage 20, 22 sont compensés par la déformation élastique des portions en saillie 72, 74.

De surcroît, grâce à la nature des appuis conférées par les portions en saillie 72, 74 des patins de rattrapage de jeux 64, les frottements à l'intérieur des glissières 60 sont ténus et ils rendent ainsi plus confortable et plus aisé l'entraînement en translation de la console 24.

En outre, les portions en saillie 72, 74 des patins de rattrapage de jeux 64 permettent d'absorber les vibrations transmises à l'habitacle par le moteur du véhicule.

## Revendications

1. Ensemble de rangement mobile d'habitacle (10) de véhicule automobile comprenant :
- deux rails de guidage (20, 22) adaptés à être installés parallèlement selon une direction longitudinale et au centre d'un habitacle de véhicule automobile, lesdits deux rails présentant chacun un chemin de roulement (56),
- une console centrale (24) comportant un châssis (26) présentant deux parties latérales opposées (28, 30) l'une de l'autre, et deux paires de galets (44, 46 ; 48, 50) respectivement montées sur lesdites deux parties latérales (28, 30), lesdites deux paires de galets (44, 46 ; 48, 50) étant adaptées à venir respectivement prendre appui sur les chemins de roulement (56) desdits deux rails de guidage (20, 22) pour pouvoir guider ladite console centrale (24) en translation ;
- lesdits rails de guidage (20, 22) comprenant chacun une glissière (60) s'étendant sous ledit chemin de roulement (56), tandis que ledit châssis (26) comprend deux ailes libres (36, 38) s'étendant respectivement en retour sous lesdites paires de galets (44, 46 ; 48, 50) pour pouvoir venir à coulissement dans les glissières (60) ;
**caractérisé en ce que**
et- **en ce que** lesdites deux ailes libres (36, 38) comportent en outre chacune des patins de rattrapage de jeux (64).

2. Ensemble de rangement mobile selon la revendication 1, **caractérisé en ce que** lesdits patins de rattrapage de jeux (64) sont montés au droit de chacun des galets (44, 46 ; 48, 50) desdites deux paires de galets.

3. Ensemble de rangement mobile selon la revendication 2, **caractérisé en ce que** lesdits patins de rattrapage de jeux (64) sont profilés en U pour pouvoir être rapportés à cheval sur lesdites ailes libres (36, 38).

4. Ensemble de rangement mobile selon la revendication 2 ou 3, **caractérisé en ce que** chacun desdits patins de rattrapage de jeux (64) présente un fond (66) et deux ailes opposées (68, 70), et **en ce que** ledit fond (66) et l'une desdites ailes (68) présentent une pluralité de portions en saillie compressibles élastiquement (72, 74).

5. Ensemble de rangement mobile selon la revendication 4, **caractérisé en ce que** chacune des portions en saillie (72, 74) présente une partie cylindrique.

6. Ensemble de rangement mobile selon la revendication 4 ou 5, **caractérisé en ce que** l'autre desdites ailes opposée (70) à ladite une desdites ailes (68), présente des lumières de fixation (80).

7. Ensemble de rangement mobile selon l'une quelconque des revendications 2 à 6, **caractérisé en ce que** lesdits patins de rattrapage de jeux (64) sont moulés d'une seule pièce en matière plastique.

8. Ensemble de rangement mobile selon la revendication 7, **caractérisé en ce que** lesdits patins de rattrapage de jeux (64) sont moulés en polyamide ou en polyoxyméthylène.

## Patentansprüche

1. Bewegliche Ablageanordnung für einen Innenraum (10) eines Kraftfahrzeugs, welche umfasst:
- zwei Führungsschienen (20, 22), die dazu eingerichtet sind, parallel in einer Längsrichtung und in der Mitte eines Innenraumes eines Kraftfahrzeugs eingebaut zu werden, wobei die zwei Schienen jeweils eine Lauffläche (56) aufweisen,
- eine Mittelkonsole (24), die ein Gestell (26) aufweist, das zwei einander gegenüberliegende Seitenteile (28, 30) und zwei Paare von Laufrollen (44, 46; 48, 50), die an den jeweiligen Seitenteilen (28, 30) gelagert sind, aufweist, wobei die zwei Paare von Laufrollen (44, 46; 48, 50) dazu eingerichtet sind, sich auf den jeweiligen Laufflächen (56) der zwei Führungsschienen (20, 22) abzustützen, um die Mittelkonsole (24) translatorisch führen zu können;
- wobei die Führungsschienen (20, 22) jeweils eine Gleitführung (60) umfassen, die sich unter der Lauffläche (56) erstreckt, während das Gestell (26) zwei freie Schenkel (36, 38) umfasst, die sich unter den jeweiligen Paaren von Laufrollen (44, 46; 48, 50) zurück erstrecken, um in den Gleitführungen (60) gleitend gelagert werden zu können,
**dadurch gekennzeichnet, dass** die zwei freien Schenkel (36, 38) außerdem jeweils Gleitschuhe zum Spielausgleich (64) aufweisen.

2. Bewegliche Ablageanordnung nach Anspruch 1, **dadurch gekennzeichnet, dass** die Gleitschuhe zum Spielausgleich (64) bei jeder der Laufrollen (44, 46; 48, 50) der zwei Paare von Laufrollen angeordnet sind.

3. Bewegliche Ablageanordnung nach Anspruch 2, **dadurch gekennzeichnet, dass** die Gleitschuhe zum Spielausgleich (64) U-Profile sind, um auf den freien Schenkeln (36, 38) aufsitzend angebracht werden zu können.

4. Bewegliche Ablageanordnung nach Anspruch 2 oder 3, **dadurch gekennzeichnet, dass** jeder der Gleitschuhe zum Spielausgleich (64) einen Boden (66) und zwei gegenüberliegende Schenkel (68, 70) aufweist, und dadurch, dass der Boden (66) und einer der Schenkel (68) mehrere vorstehende Abschnitte (72, 74) aufweisen, die elastisch zusammendrückbar sind.

5. Bewegliche Ablageanordnung nach Anspruch 4, **dadurch gekennzeichnet, dass** jeder der vorstehenden Abschnitte (72, 74) einen zylindrischen Teil aufweist.

6. Bewegliche Ablageanordnung nach Anspruch 4 oder 5, **dadurch gekennzeichnet, dass** der andere der Schenkel (70), der dem einen der Schenkel (68) gegenüberliegt, Befestigungsschlitze (80) aufweist.

7. Bewegliche Ablageanordnung nach einem der Ansprüche 2 bis 6, **dadurch gekennzeichnet, dass** die Gleitschuhe zum Spielausgleich (64) einstückig aus Kunststoff geformt sind.

8. Bewegliche Ablageanordnung nach Anspruch 7, **dadurch gekennzeichnet, dass** die Gleitschuhe zum Spielausgleich (64) aus Polyamid oder aus Polyoxymethylen geformt sind.

## Claims

1. Mobile stowage assembly for a motor vehicle cabin (10), comprising:
- two guide rails (20, 22) designed to be installed parallel in a longitudinal direction and in the centre of a motor vehicle cabin, said two rails each having a rolling track (56),
- a central console (24) comprising a chassis (26) having two lateral parts (28, 30) opposite to one another, and two pairs of rollers (44, 46; 48, 50) respectively mounted on said two lateral parts (28, 30), said two pairs of rollers (44, 46; 48, 50) being designed to respectively bear on the rolling tracks (56) of said two guide rails (20, 22) in order to be able to guide said central console (24) in translation;
- said guide rails (20, 22) each comprising a slideway (60) extending below said rolling track (56), whereas said chassis (26) comprises two free wings (36, 38) extending respectively back below said pairs of rollers (44, 46; 48, 50) in order to be able to slide in the slideways (60);
**characterized in that** said two free wings (36, 38) further each comprise play-compensating shoes (64).

2. Mobile stowage assembly according to Claim 1, **characterized in that** said play-compensating shoes (64) are mounted in line with each of the rollers (44, 46; 48, 50) of said two pairs of rollers.

3. Mobile stowage assembly according to Claim 2, **characterized in that** said play-compensating shoes (64) are profiled in a U shape so as to be able to be fitted astride said free wings (36, 38).

4. Mobile stowage assembly according to Claim 2 or 3, **characterized in that** each of said play-compensating shoes (64) has a bottom (66) and two opposite wings (68, 70), and **in that** said bottom (66) and one of said wings (68) have a plurality of elastically compressible projecting portions (72, 74).

5. Mobile stowage assembly according to Claim 4, **characterized in that** each of the projecting portions (72, 74) has a cylindrical part.

6. Mobile stowage assembly according to Claim 4 or 5, **characterized in that** the other of said wings (70) opposite to said one of said wings (68) has fastening openings (80).

7. Mobile stowage assembly according to any one of Claims 2 to 6, **characterized in that** said play-compensating shoes (64) are moulded in one piece from plastics material.

8. Mobile stowage assembly according to Claim 7, **characterized in that** said play-compensating shoes (64) are moulded from polyamide or polyoxymethylene.
